# EUROPEAN PATENT APPLICATION

(11) **EP 2 749 340 A1**
(43) Date of publication of application: **02.07.2014**
(21) Application number: 13167335.2
(22) Date of filing: 10.05.2013
(51) Int. Cl.: B01D 47/05, B01D 47/06, B01D 53/14, B01D 53/00

(54) **Low energy-consumption purification device**

(30) Priority: 28.12.2012 CN 201210585167
(71) Applicant: Cheng Yuan Environmental Technology Co., Ltd., Taoyuan City 33055 (TW)
(72) Inventor: Lin, Yi-Cheng, Taoyuan City Taoyuan County 33055 (TW)
(74) Representative: Chaillot, Geneviève

(57) **Abstract**

A low energy-consumption purification device comprises a humidifier (22) arranged inside an unpurified airflow passage (20) to spray water mist all over the unpurified airflow for increasing humidity thereof; a condenser (21) arranged inside the unpurified airflow passage (20) and located at a downstream end of the humidifier (22) to condense the unpurified airflow into condensate contained substances requiring purification; an air temperature controller (25) arranged inside the unpurified airflow passage (20) and located at an upstream end of the humidifier (22) for warming or cooling the unpurified airflow in the air temperature controller (25); and a first heat exchanger (23) connected to the condenser (21) to achieve a desired condensing temperature. The present invention is able to enhance a performance of an adsorption treatment for unpurified substances and provide the effect of expanding the rage of the treatment temperature.

## Description

### BACKGROUND OF THE INVENTION

### 1. Field of the Invention:

The invention relates to a low energy-consumption purification device, particularly to spray water mist all over an unpurified airflow for increasing a temperature difference between an operation temperature of a condenser and a dew point temperature of the unpurified airflow and using a low energy-consumption cooling tower instead of a usual high energy-consumption chiller to conduct a condensing treatment.

### 2. Description of the Related Art

Organic solvents are widely used in life and industry, organic solvents can easily volatilized into gas at room temperature; therefore, organic solvents have also known as volatile organic compounds. Most of the volatile organic compounds are toxic and harmful to human body so a proper purification treatment is required for them. An unpurified airflow generated by the treatment contains water-soluble volatile organic compounds with high boiling point and low vapor pressure which are usually separated from the unpurified airflow by a condensing device. A purification device then collects the non-separated volatile organic compounds for conducting an incineration or a condensation process after adsorption and concentration. Moreover, airflow into a clean room must be purified to remove suspended particles contained in the airflow.

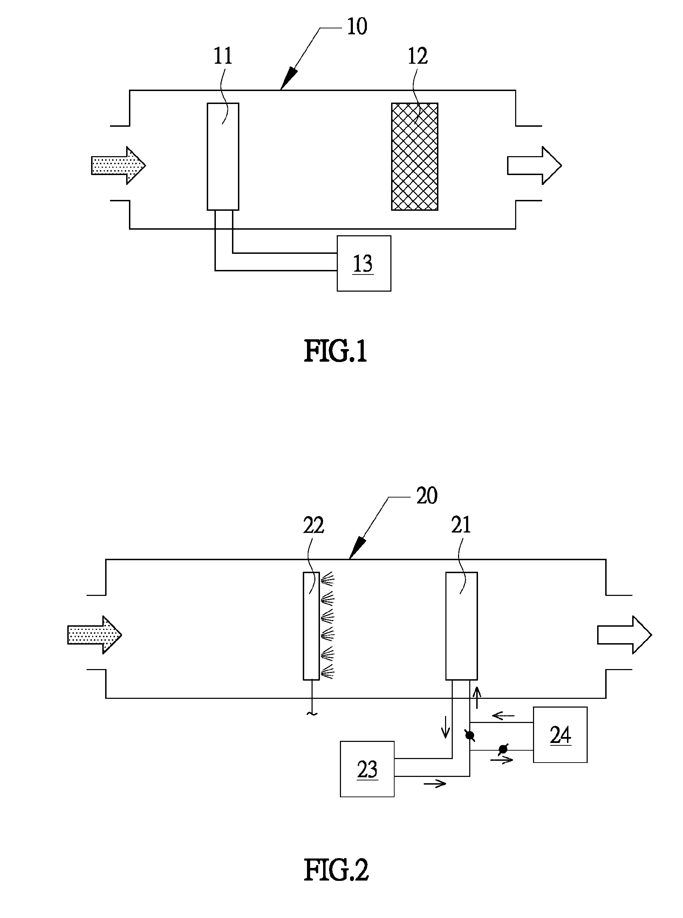

FIG. 1 illustrates a conventional condensing device for separating water-soluble volatile organic compounds from an unpurified airflow, comprising a condenser 11 arranged in an unpurified airflow passage 10 and allowing the temperature of unpurified airflow dropped below a dew point temperature. The water-soluble volatile organic compounds are separated from the unpurified airflow by adsorption of condensed water and condensation of the volatile organic compound itself. The conventional condensing device further comprises a demister 12 or a second condenser (not shown) arranged at a downstream end of the condenser 11 to allow the volatile organic compounds with smaller particle diameter and water vapor to growing for separation or secondary condensation. However, the condenser 11 is usually connected to a chiller 13, a high energy-consumption heat exchanger. Once the temperature of the unpurified airflow is much higher than the operation temperature of the condenser 11, the general standard chiller is unable to provide sufficient condensation for condensing and separating the volatile organic compounds. On the other hand, when the low ambient temperature or relative humidity leads the operation temperature of the condenser 11 to be higher than the dew point temperature of unpurified airflow, a high standard chiller should be provided for producing sufficient condensation effect.

### SUMMARY OF THE INVENTION

It is a primary object of the present invention to provide a low energy-consumption purification device, which has an energy-saving effect.

It is a second object of the present invention to provide a low energy-consumption purification device, which has an effect of expanding a rage of a treatment temperature.

It is a third object of the present invention to enhance a performance of an adsorption treatment for unpurified substances.

In order to achieve the above objects, the present invention includes a low energy-consumption purification device according to claim 1.

The present invention may further comprises an air temperature controller arranged inside the unpurified airflow passage and located at an upstream end of the humidifier for warming or cooling the unpurified airflow in the air temperature controller and/or a water temperature controller arranged at a water supply tube of the humidifier for humidifying and warming or humidifying and cooling the unpurified airflow passed through the humidifier. Furthermore, the first heat exchanger may be connected in series with a second heat exchanger; the first heat exchanger may be a cooling tower and the second heat exchanger may be a chiller; the purified substances may be volatile organic substances or suspended particles.

### BRIEF DESCRIPTION OF THE DRAWINGS

FIG. 1 is a structure schematic view of a conventional device for treatment of volatile organic compounds;
FIG. 2 is a structure schematic view of a first embodiment in accordance with the present invention;
FIG. 3 is a structure schematic view of a second embodiment in accordance with the present invention;
FIG. 4 is a structure schematic view of a third embodiment in accordance with the present invention; and
FIG. 5 is a schematic view of humidity changes in a psychrometric chart in accordance with the present invention.

### DETAILED DESCRIPTION OF THE PREFERRED EMBODIMENT

With the referenced to FIG. 2, the first embodiment of a low energy-consumption purification device in accordance with the present invention comprises a humidifier **22** arranged inside an unpurified airflow passage **20** to spray water mist all over the unpurified airflow for increasing humidity thereof; a condenser **21** arranged inside the unpurified airflow passage **20** and located at a downstream end of the humidifier **22** to condense the unpurified airflow humidified into condensate containing unpurified substances which are volatile organic substances or suspended particles; and a first heat exchanger **23** is connected to the condenser **21** for the condenser **21** to achieve a desired condensing temperature. Further, the first heat exchanger **23** is a cooling tower connected in series with a second heat exchanger **24** to enhance the condensation effect of the condenser **21;** the second heat exchanger **24** is a chiller.

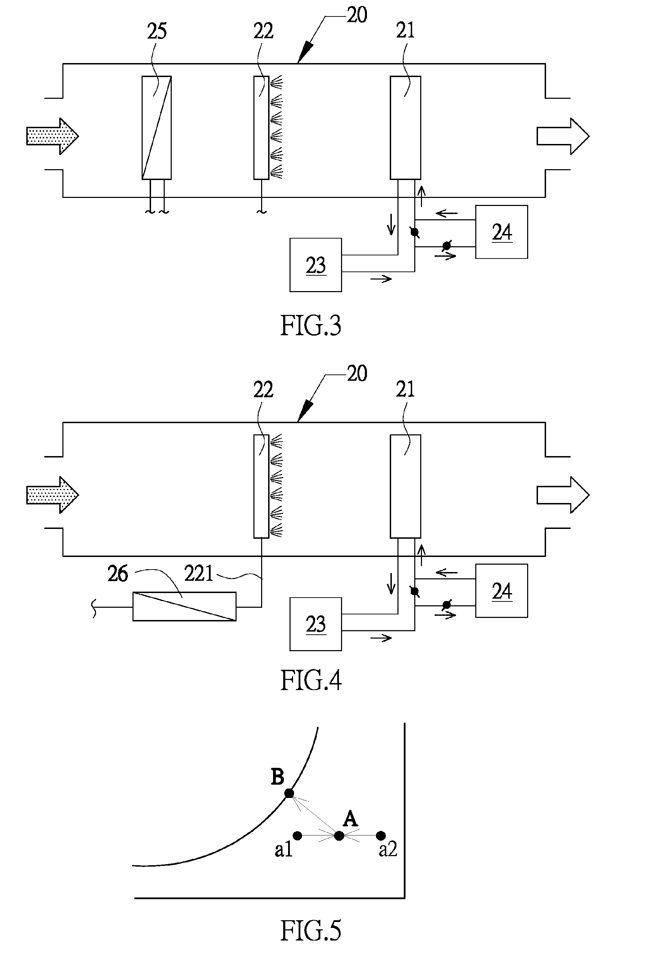

With the referenced to FIG. 3, the second embodiment of the present invention compared to the first embodiment further includes an air temperature controller **25** arranged inside the unpurified airflow passage **20** and located at an upstream end of the humidifier **22** to warm the unpurified airflow therein for increasing a dew point temperature of the unpurified airflow passed through the humidifier **22** or to cool down the unpurified airflow in the air temperature controller **25** for reducing the load of the first heat exchanger **23.** With the referenced to FIG. 4, the third embodiment of the present invention compared to the first embodiment further includes a water temperature controller **26** arranged at a water supply tube **221** of the humidifier **22** to humidify and warm the unpurified airflow in the humidifier **22** for increasing the dew point temperature of the unpurified airflow passed through the humidifier **22** or to humidify and cool down the unpurified airflow in the humidifier **22** for reducing the load of the first heat exchanger **23.**

FIG. 5 shows a psychrometric chart and the horizontal axis of the psychrometric chart represents the dry bulb temperature; the vertical axis of the psychrometric chart represents humidity ratio; the curved line is a relative humidity saturation line. Point A shown in the psychrometric chart represents the humidity of the unpurified airflow and point B shown in the psychrometric chart represents the humidity of the unpurified airflow humidified. The point B is usually located on the relative humidity saturation line while the unpurified airflow is humidified by the humidifier **22.** Then, the point B downward moves along the relative humidity saturation line while the unpurified airflow humidified is condensed by the condenser **21.** Therefore, as long as the dew point temperature of the point B is higher than the operation temperature of the condenser **21,** the unpurified substances in the unpurified airflow is condensed and separated by the condenser **21.**

If the low temperature of the unpurified airflow or the low relative humidity marked as point a1 in the psychrometric chart leads the dew point temperature of the unpurified airflow humidified to be lower than the operation temperature of the condenser **21,** the air temperature controller **25** is provided for warming the unpurified airflow to the aforementioned point A to conduct the aforementioned condensation and separation procedures or the water temperature controller **26** is provided for humidifying and warming the unpurified airflow in the humidifier **22** to conduct the aforementioned condensation and separation procedures.

If that the temperature of the unpurified airflow is much higher than the operation temperature of the condenser **21,** marked as point a2 in the psychrometric chart leads the load of the first heat exchanger **23** to be great, the air temperature controller **25** is provided for cooling the unpurified airflow to the aforementioned point A to conduct the aforementioned condensation and separation procedures or the water temperature controller **26** is provided for humidifying and cooling the unpurified airflow in the humidifier **22** to conduct the aforementioned condensation and separation procedures.

Therefore, that the humidity of the unpurified airflow is moved toward the upper-left corner of the psychrometric chart represents the dew point temperature of the unpurified airflow to be increased and the temperature difference between the operation temperature of the condenser **21** and the dew point temperature of the unpurified airflow to be widened for greatly increasing the amount of water condensation and enhancing the adsorption of substances. Moreover, the present invention provides the water temperature controller **26** and air temperature controller **25** for warming or cooling the unpurified airflow to balance the temperature of the unpurified airflow, having effect of expanding the rage of treatment temperature. Furthermore, the present invention provides the humidifier **22** for humidifying the unpurified airflow to increase the dew point temperature and reducing the temperature to reduce the load of the first heat exchanger **23** at the same time; thus, the heat exchanger **23** may use the low energy cooling tower instead of the usual high energy-consumption chiller, having energy-saving effect. The cooling tower of the heat exchanger **23** may further be connected in series with a chiller as the second heat exchanger **24** to serve as necessary to enhance the condensation effect of the condenser **21.**

## Claims

1. A low energy-consumption purification device, comprising:
a humidifier (22) arranged inside an unpurified airflow passage (20) to spray water mist all over the unpurified airflow for increasing humidity thereof;
a condenser (21) arranged inside the unpurified airflow passage (20) and located at a downstream end of the humidifier (22) to condense the unpurified airflow into condensate contained substances requiring purification; and
a first heat exchanger (23) connected to the condenser (21) to achieve a desired condensing temperature.

2. The low energy-consumption purification device as claimed in claim 1, further comprising an airflow temperature controller (25) arranged inside the unpurified airflow passage (20) and located at an upstream end of the humidifier (22) for warming or cooling the unpurified airflow in the airflow temperature controller (25).

3. The low energy-consumption purification device as claimed in claim 1, further comprising a water temperature controller (26) arranged at a water supply tube (221) of the humidifier (22) for humidifying and warming or humidifying and cooling the unpurified airflow passed through the humidifier (22).

4. The low energy-consumption purification device as claimed in claim 1 to 3, wherein the first heat exchanger (23) is connected in series with a second heat exchanger (24).

5. The low energy-consumption purification device as claimed in claim 4, wherein the first heat exchanger (23) is a cooling tower and the second heat exchanger (24) is a chiller.

6. The low energy-consumption purification device as claimed in claim 4, wherein the unpurified substances are volatile organic substances or suspended particles.
